(19) Europäisches Patentamt
European Patent Office
Office européen des brevets

(11) **EP 1 775 957 A1**

(12) **EUROPEAN PATENT APPLICATION**

(43) Date of publication:
**18.04.2007 Bulletin 2007/16**

(51) Int Cl.:
**H04N 7/26** (2006.01)

(21) Application number: **05292167.3**

(22) Date of filing: **14.10.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Inria Institut National de Recherche en Informatique et en Automatique**
**78153 Le Chesnay Cedex (FR)**

(72) Inventors:
• **Rath, Gagan**
  **35510 Cesson-Sevigne (FR)**
• **Guillemot, Christine**
  **35135 Chantepie (FR)**

(74) Representative: **Plaçais, Jean Yves**
**Cabinet Netter,**
**36, avenue Hoche**
**75008 Paris (FR)**

(54) **Improved multi-resolution image processing**

(57) An improved image coder is proposed for efficiently encoding an image signal. A resolution reducer (305) derives a lower resolution signal (S3) from an input signal (S2). An interpolator (355) produces a predicted signal (IXD3) from the lower resolution signal (S3), and an upper resolution predictor (250) delivers a difference signal (DBD2) from said input signal (S2) and from said predicted signal (IXD3). According to the invention, the difference signal (DBD2) is further transformed into a modified difference signal, in which samples are discarded according to a scheme, such that the difference signal (DBD2) is substantially recoverable from the modified difference signal. The input signal may thus be represented by the modified difference signal which much smaller and may be used to reconstruct the input signal. A decoder is also proposed as well as corresponding methods of encoding and decoding image signals.

FIGURE 1A

FIGURE 1B

FIGURE 1C

FIGURE 1D

2

**Description**

The present invention relates to image processing.

It has recently been found interesting to provide multi-resolution encoding of image or video information, in which the coded signals or data comprise representations of the image(s) at different resolutions. This is also termed scalable encoding/decoding. An example is the scalable video coding architecture of the ISO/MPEG/JVT group, which will be considered hereinafter in more detail.

Scalable encoding/decoding makes use of various prediction mechanisms, with the purpose of removing redundant information. These prediction mechanisms tend to reduce the spatial redundancy of an image. Furthermore, in the case of video, they also tend to reduce the time redundancy, and to make a difference between the background or texture, and the moving objects in the image.

Now, the currently available schemes keep an important amount of spatial redundancy. This invention comes to improve the situation, in making it possible to significantly reduce the amount of spatial redundancy.

Generally, this invention may apply in an image processing apparatus, in which one may conveniently distinguish two interacting processing levels, designated as "upper resolution processing level" and "lower resolution processing level".

The apparatus has a resolution reducer, for deriving a lower resolution input image signal from an upper resolution input image signal. The lower resolution input image signal may be further processed in the lower resolution processing level (that processing may include e.g. a time prediction). An interpolator produces an upper resolution predicted signal, from the lower resolution input image signal.

The upper resolution processing level has an upper resolution predictor, for delivering an upper resolution difference signal from an upper resolution input image signal and from said upper resolution predicted signal. Thus, the required amount of image information at the output of the upper resolution processing level is diminished.

Generally, this invention proposes that the apparatus further comprises a selected transform, capable of changing said upper resolution difference signal into a modified difference signal, in which samples are discarded according to a given scheme. The given scheme is selected such that the original upper resolution difference signal is substantially recoverable from the modified signal difference signal.

As it will be seen in the appended claims and in the description below, this invention also proposes a coder version of the above apparatus, and a corresponding decoder, together with corresponding methods. It also encompasses the signals as obtained. It further encompasses executable software for use in the apparatus, coder, and/or decoder, as well as for performing the corresponding methods.

Other alternative features and advantages of the invention will appear in the detailed description below and in the appended drawings, in which :

- Figure 1A shows a general block diagram of an open-loop scalable video coding (SVC) architecture ;
- Figure 1B shows a general block diagram of a closed-loop SVC coding architecture ;
- Figure 1C is a partially detailed view of the block diagram of Figure 1B ;
- Figure 1D shows a general block diagram of a decoding architecture ;
- Figure 2A shows a partial block diagram of a coder, assuming no quantization occurs ;
- Figure 2B shows a partial block diagram of a decoder, corresponding to the coder of Figure 2A ;
- Figure 3A shows the block diagram of Figure 2A, as modified in accordance with a first embodiment of this invention ;
- Figure 3B shows the block diagram of Figure 2B, as modified to correspond to the coder of Figure 3A ;
- Figure 3C shows how the functional blocks of figure 3A may interact in the coding architecture of Figure 1A or 1B ;
- Figure 3D shows how the functional blocks of figure 3B may interact in the decoding architecture of Figure 1D ;
- Figure 4A shows a partial block diagram of a coder, in the case of quantization in the open-loop prediction scheme shown in Figure 1A ;
- Figure 4B shows a partial block diagram of a decoder, corresponding to the coder of Figure 4A ;
- Figure 5A shows the block diagram of Figure 2A, as modified in accordance with the first embodiment of this invention, in the case of quantization in the open-loop prediction scheme shown in Figure 1A ;
- Figure 5B shows the block diagram of Figure 2B, as modified to correspond to the coder of Figure 5A ;
- Figure 6A shows a partial block diagram of a coder, in the case of quantization in the closed-loop prediction scheme shown in Figure 1B ;
- Figure 6B shows a partial block diagram of a decoder, corresponding to the coder of Figure 6A ;
- Figure 7A shows the block diagram of Figure 2A, as modified in accordance with the first embodiment of this invention, in the case of quantization in the closed-loop prediction scheme shown in Figure 1B ;
- Figure 7B shows the block diagram of Figure 2B, as modified to correspond to the coder of Figure 7A ;
- Figure 8A shows the block diagram of Figure 4A, as modified in accordance with a second embodiment of this invention, in the case of quantization in the open-loop prediction scheme shown in Figure 1A ;

- Figure 8B shows the block diagram of Figure 4B, as modified to correspond to the coder of Figure 8A ;
- Figure 9A shows the block diagram of Figure 6A, as modified in accordance with a second embodiment of this invention, in the case of quantization in the closed-loop prediction scheme shown in Figure 1B ;
- Figure 9B shows the block diagram of Figure 6B, as modified to correspond to the coder of Figure 9A ; and
- Figures 10 through 12 show graphs illustrating the operation of this invention, compared to known systems.

This description is also supplemented with an Exhibit 1, including equations and/or expressions. This Exhibit is placed apart for the purpose of simplifying the text of the detailed description, and of enabling easier reference. It nevertheless forms an integral part of the description of the present invention. This applies to the drawings as well.

While the equation identifiers have round brackets in Exhibit 1, the description will use equation identifiers having square brackets, with a view to avoiding any confusion with references to the drawings.

The description below will refer to various concepts of linear algebra, including matrix algebra, and singular value decomposition, *inter alia.* Support to understand these concepts may be found e.g. in : G. Strang, Linear Algebra and Its Applications, 3rd Ed., Brooks Cole Publishers, 1988.

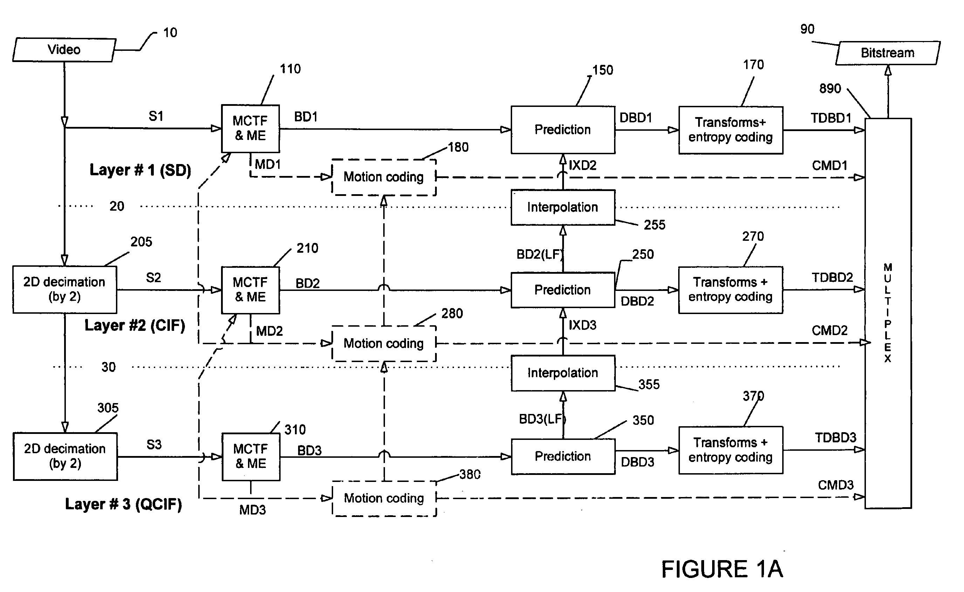

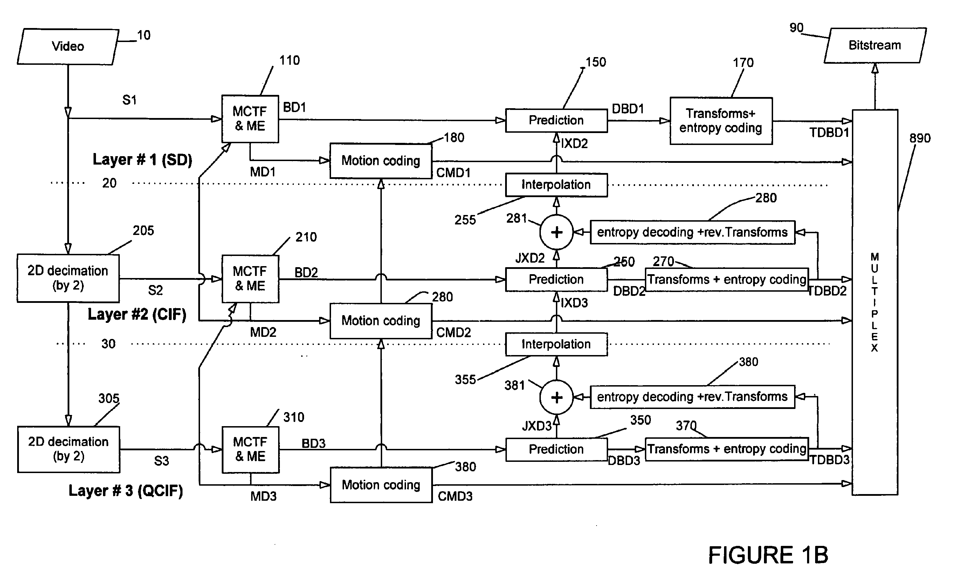

Exemplary contexts in which the invention may apply will now be described, referring to the block diagrams shown in Figure 1A and 1B.

Figure 1A depicts an open-loop scalable video coding (SVC) architecture. Figure 1B depicts a closed-loop architecture of scalable video coding, as currently specified by the ISO/MPEG/JVT group.

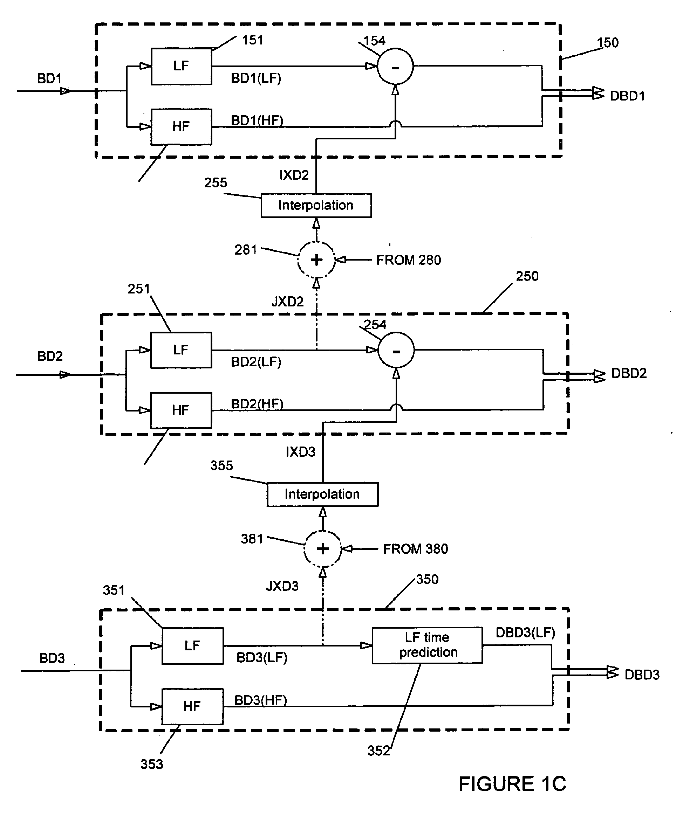

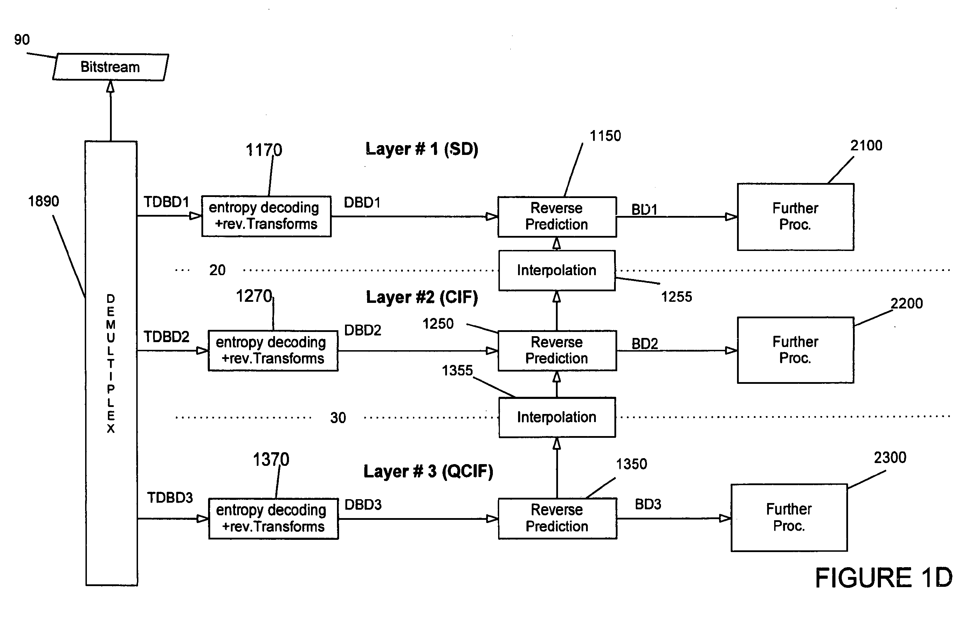

As shown in Figure 1A, input block 10 represents a high resolution video signal input S1. Output block 90 represents the corresponding bitstream output. The rest of the block diagram of Figure 1 may be divided in three layers :

- a first or upper layer is above dotted line 20 (excluding blocks 10, 90 and 890),
- a second or intermediate layer is between dotted lines 20 and 30 (excluding blocks 205 and 890), and
- a third or lower layer is below dotted line 30 (excluding blocks 305 and 890).

Each of these layers forms a signal processing level. The signal processing resolution decreases from the top layer to the bottom layer, as it will now be understood.

Starting from the higher resolution signal S1 delivered by block 10 :

- input signal S1 (first signal) is directly fed to input block 110 of the upper layer. In the SVC standard, the upper layer is devoted to obtaining a signal often called SD (for Standard Definition). Typically, this signal has a spatial resolution of e.g. 704 x 576 pixels, and may be used for standalone television sets.
- in resolution reducer block 205, input signal S1 is filtered and downsampled by a factor of 2 horizontally and vertically to generate a second signal S2 at a lower spatial resolution. This second signal S2 is fed to input block 210 of the intermediate layer. Typically, this signal has a spatial resolution of e.g. 352 x 288 pixels, and may be used for viewing video on laptops.
- in resolution reducer block 305, input signal S1 is filtered and downsampled by a factor of 4 horizontally and vertically (or a factor 2 from S2) to generate a third signal S3 at a still lower spatial resolution. This third signal S3 is fed to input block 310 of the lower layer. Typically, this signal has a spatial resolution of e.g. 176 x 144 pixels, and may be used for viewing video on mobile telephones.

In the SVC standard, the second signal S2 of the intermediate or second layer is often called CIF ("Common Intermediate format"). Hence, the first signal S 1 may also be denoted 4xCIF (four times CIF), in short "4CIF". Similarly, the third signal S3 of the third or lower layer is often called QCIF signal (for quarter CIF).

Interlayer interaction is also provided for, as shown by blocks 255 and 355 (to be described hereinafter), placed across lines 20 and 30, respectively.

Such a layered coding architecture achieves a wide range of spatio-temporal and quality scalability. The three layers have a similar general structure, and will now be commonly described in more detail. Considering the layers functionally, the signals corresponding to the different spatial resolutions (e.g., SD, CIF and QCIF) are decomposed temporally via a hierarchical motion-compensated temporal prediction structure with layer-specific motion parameters. Accordingly, the parameters of the blocks may be different from one layer to the other.

The first block (110;210;310) comprises a motion-compensated temporal filtering and motion estimation function, in short MCTF & ME. Each of the first blocks (or some of them) may have an output delivering background image data (BD1;BD2;BD3), also called texture data, and another output delivering motion oriented data (MD1;MD2;MD3).

Basically, the MCTF & ME function distinguishes texture data from motion data by determining and tracking the directions of motion in the sequence of images being considered.

As shown, the motion estimation may take motion data from a lower layer into account, e.g. block 110 receives motion data MD2 from block 210. In Figure 1A, the motion related blocks and corresponding connectors are distinguished by dashed lines. In fact, the motion processing is a useful, but optional feature, interesting mainly for certain video images. As it will be appreciated, the motion processing is left substantially unchanged in this invention.

In each layer, the background image data (BD1;BD2;BD3) is then applied to a second block comprising a prediction function (150;250;350). Each of the second blocks (or some of them) has an output (DBD1;DBD2;DBD3) delivering data related to variations in the background image data (BD1;BD2;BD3).

In each layer, the data (DBD1;DBD2;DBD3) related to variations in the background image data are applied to a post processing function (170;270;370), delivering transformed data (TDBD1;TDBD2;TDBD3). The post processing function may comprise various transforms, e.g. a 4 x 4 spatial transform and/or Signal to Noise Ratio (SNR) scalable entropy coding, as described e.g. in Joint Video Team (JVT) of ISO/IEC MPEG and ITU-T VCEG (ISO/IEC JTC1/SC29/WG11 and ITU-T SG16 Q.6), Revised Joint Scalable Video Model JSVM-2 (Document No: JVT-O202, Filename: JVT-P006-JSVM2-revised.doc), 16th Meeting, Poznan, Poland, July 2005. 7. These transforms perform the real coding, which results in the bitstream output signal 90. The scalable entropy coding transform may use the teachings of WO-2004/012339 and/or WO-2004/012340.

In each layer, the motion oriented data (MD1;MD2;MD3) delivered by the first block (110;210;310), or some of them, may be applied to amotion coding function (180;280;380), which delivers coded motion data (CMD1;CMD2;CMD3).

The output bit stream 90 may be constructed by a multiplexer 890 (or output builder), which is fed in parallel with the output data (TDBD1;TDBD2;TDBD3) of the post processing blocks (170;270;370) on the one hand, and with the output data (CMD1;CMD2;CMD3) of the motion coder blocks (180;280;380), on the other hand. The actual output bitstream is constructed from the components (TDBD1;TDBD2;TDBD3;CMD1;CMD2;CMD3) in accordance with a format which is known to both the encoder and the decoder. The output bitstream may be viewed as a concatenation of the components TDBD1, TDBD2, TDBD3, CMD1, CMD2, CMD3, although more sophisticated formats may be used.

Turning now to Figure 1B, most of the functional blocks are arranged as in Figure 1A, and have the same reference numerals. The differences are as follows :

- in Figure 1A (open loop), the interpolation from a layer to the upper adjacent layer is made from the signal upstream the prediction (250 or 350) ;
- in Figure 1B (closed loop), the interpolation from a layer to the upper adjacent layer is made from a signal obtained by adding the predicted signals to the decoded detail signals which are available downstream, i.e. considering signals as seen by the decoder. Accordingly, Figure 1B comprises additional blocks 280, 281 and 380, 381. Blocks 280 and 380 perform the reverse operations (thus, in the reverse order) of those made in blocks 270 and 370, respectively.

More specifically, block 380 delivers the reciprocal transform of signal TDBD3 into DBD3, which is added to BD3 in adder 381 to obtain the input of interpolator block 355. Similarly, block 280 delivers the reciprocal transform of signal TDBD2 into DBD2, which is added to IXD3 in adder 281 to obtain the input of interpolator block 255.

In Figures 1A or 1B, the lefthand portion of the architecture, for generating signals S2 and S3 from S1, is also termed "Gaussian pyramid". Considering in addition the structure for generating the signals DBD1, DBD2 and DBD1, one obtains a Laplacian pyramid, which is used to create a spatial resolution hierarchy.

While the BD3 signal is a full range (low spatial resolution) signal, the signals DBD1, DBD2 and DBD3 are difference signals, which may be termed "detail signals". It is important to understand that, at the lower level (here, level 3), DBD3 is not a same kind of detail signal as DBD1 and DBD2. This is illustrated in Figure 1C, which corresponds to the case of Figure 1B.

As shown in Figure 1C, prediction block 150 has a digital low-pass filter 151 and a digital high-pass filter 153, which split signal BD1 into a HF component BD1 (HF) and a LF component BD1 (LF). Up to this point, the construction is the same for the two other prediction blocks 250 and 350. In each case, the interlayer prediction is applied only to the LF component of the lower resolution signal. And the output signal, e.g. DBD2, comprises a difference component for the LF portion, e.g. DBD2(LF), and a non-difference component for the HF portion, e.g. BD2(HF).

However, layer 3 is here the lowest resolution layer, since there is no lower resolution signal coming up. With a total of n layers (n > 1), the n-th layer would be the lowest resolution layer.

In the lowest resolution layer, the LF component BD3(LF) is difference-coded into DBD3(LF), on the basis of a time prediction in block 352. Assuming, for simplification, that two consecutive portions of BD3 are identical, DBD3 (LF) might include the first portion, plus an information that there is no difference between the second portion and the first portion. Then, output signal DBD3 is formed from both the HF component BD3(HF) and the LF difference component DBD3(LF).

Now, the construction of signals DBD1 and DBD2 by blocks 150 and 250 is different. For example, block 250 has a subtractor 254 which builds DBD2(LF) as the difference between BD2(LF) and the interpolated signal IXD3 (derived from) coming from the adjacent layer of lower resolution (here layer 3). Alternatively, block 250 might additionally contain a low frequency time prediction as well, as done in block 350, e.g. such that, for the same part of the frame, there can be either temporal or spatial prediction, but not both.

To sum up :

- the content of BD3 is fully present in DBD3, but in a different manner ;
- the content of BD2 is contained in the combination of DBD3 and DBD2, however not in DBD2 alone;
- the content of BD1 is contained in the combination of DBD3, DBD2, and DBD1.

Thus, DBD3, DBD3+DBD2, and DBD3+DBD2+DBD1 keep substantially the same quality of representation as the original signals S3, S2 and S1, respectively, both spatially and temporally. The subsequent stages 170, 270 and 370 may change this, e.g. by including a quantization, which reduces the coding range and removes less significant bits. This will be considered hereinafter.

In addition, Figure 1C shows the connections to 381 of Figure 1B in more detail. The downside connection receives a signal JXD3 comprising the BD3(LF) component. Optionally, signal JXD3 will also comprise the BD3(HF) component, if prediction of the HF component is also implemented in the immediately adjacent layer upwards.

Figure 1C also reminds that adder 281 of Figure 1B receives the signal IXD3 (renamed JXD2 for consistence in notations), comprising the BD2(LF) component (and also the BD2(HF) component in the above quoted option, not shown).

Prediction blocks 150,250 and 350 of Figure 1A may also have the detailed structure shown in Figure 1C. However, blocks 281 and 381 (shown in dashed line) are absent in Figure 1A, and the interpolators 255 and 355 will directly receive signals JDX2 and JDX3, respectively. The same options as above may apply, i.e. with or without the relevant HF component.

Figure 1C is a schematic representation, developed only to the extent necessary to describe this invention. In particular, according to the above mentioned option, the interlayer spatial prediction may also involve the HF components of the signals, at least in certain layers. More generally, the prediction may involve more complex known processes. An exemplary description thereof may be found in the above cited JVT-0202 document.

Figure 1D shows those of the general functions of a decoder which correspond to the functions shown in Figure 1A or 1B, however without considering the motion related features, which need not be modified in accordance with this invention. The blocks corresponding to figure 1A or 1B have the same reference numeral plus 1000. They generally do the reverse operation, except for interpolators 1255 and 1355, which are the same as interpolators 255 and 355, respectively. Finals blocks 2100,2200 and 2300 perform the required functions for the application being considered, including recovering and incorporating motion related data. Of course, Layer 1 is not necessary where only CIF signals are desired ; similarly, Layers 1 and 2 are not necessary where only QCIF signals are desired.

Further descriptions of known aspects of the Laplacian Pyramid may be found in the following publications :

- P. J. Burt and E. H. Adelson, "The Laplacian pyramid as a compact image code", IEEE Trans. Communications, Vol. 31, No. 4, pp. 532-540, April 1983.
- M. N. Do and M. Vetterli, "Framing pyramid", IEEE Trans. Signal Processing, Vol. 51, No. 9, pp. 2329 - 2342, Sept. 2003.

A further description of framing features as proposed by DO and VETTERLI may be found in the following publication :

- V. K. Goyal, J. Kovaević and J. A. Kelner, "Quantized frame expansions with erasures", Applied and Computational Harmonic Analysis, Vol. 10, No. 3, pp. 203 - 233, May 2001.

In fact, a spatial resolution hierarchy as shown in Figure 1A or 1B is highly redundant, since the SD video signal embeds both the CIF and the QCIF video signals, and, in turn, the CIF video signal again embeds the QCIF video signal.

The redundancy between the different spatial layers may be exploited by different interlayer prediction mechanisms for motion parameters as well as for texture data. These mechanisms are more easily understood when starting from the lower layer.

Considering texture data, signal BD3 serves as an input to interpolation block 355, which will :

- supplement signal BD3 with additional sample positions (oversampling) to reach the resolution of the intermediate layer, i.e. the same resolution as output BD2 of MCTF block 210 ;
- fill-in these additional sample positions, by interpolation on the basis of the original samples of BD3.

The resulting output signal IXD3 of interpolation block 355 may be viewed as a low resolution estimate of what the signal BD2 to prediction block 250 in the intermediate layer could be.

Then, the output DBD2 of the prediction mechanism in block 250 may use only the difference between signal BD2 (which it receives from block 210) and the interpolated version IXD3 of the signal at the lower spatial resolution of the third texture signal (which it receives from block 355). Note that in the closed loop structure of Figure 1B, the signal IXD3 (and IXD2 as well) is rebuilt the same as in the decoder, before the interpolation is made.

The same applies to blocks 150, 110, 255 and 250, however between the intermediate resolution BD2 of the second signal (CIF), interpolated as IXD2, and the higher resolution BD1 of the SD or first signal.

This corresponds to a so-called "Laplacian pyramid spatial decomposition" of the input signal. The spatial decomposition is said to be an "open loop spatial prediction" when applying the context of Figure 1A, or a "closed-loop spatial prediction" when applying the context of Figure 1B.

Since the prediction stages (150;250) and subsequently the transform stages (170;270) may work only on difference signals, the required dynamic range for each sample of these signals is reduced. Hence a lower requirement in terms of coding range, and, finally, a gain in terms of bits to be incorporated in the output bitstream, and then transmitted, or stored for other purposes. In short, the spatial redundancy is reduced, by coding differences.

Now, there remains a certain amount of spatial redundancy in the difference signals: output signal TDBD2 has the same spatial resolution as signal BD2 ; similarly, output signal TDBD1 has the same spatial resolution as signal BD1. However, one may observe that these difference output signals TDBD2 and TDBD1 likely do not actually need the same spatial resolution as signals BD2 and BD1. This illustrates that these signals TDBD2 and TDBD1 are spatially redundant.

When the detail signals, considered together, i.e. DBD3+ DBD2+DBD 1, have substantially no redundancy, whether spatially or temporally, they are said to construct a critically-sampled representation of the signal from the Laplacian pyramid representation.

A possible way to reach a critically- sampled representation of the signal is the so-called "wavelet transform", as proposed in the article : C. A. Christopoulos, T. Ebrahimi, and A. N. Skodras, "JPEG2000 : the new still picture compression standard", ACM Multimedia Workshops, pp. 45 - 49, 2000. However, the wavelet transform uses both low pass filtering and high pass filtering. It must also satisfy rather demanding constraints, which prevents the use of fully efficient anti-aliasing filters. As a consequence, the resulting signals from the wavelet transform are hardly compatible with motion analysis, i.e. the need for motion detection and coding.

The applicants have found improved signal decomposition techniques (and corresponding reconstruction techniques) which make it possible to reduce or minimize the redundancy in the spatial resolution, existing between two or more layers, e.g. as described above with reference to Figure 1, while remaining compatible with the need for motion analysis.

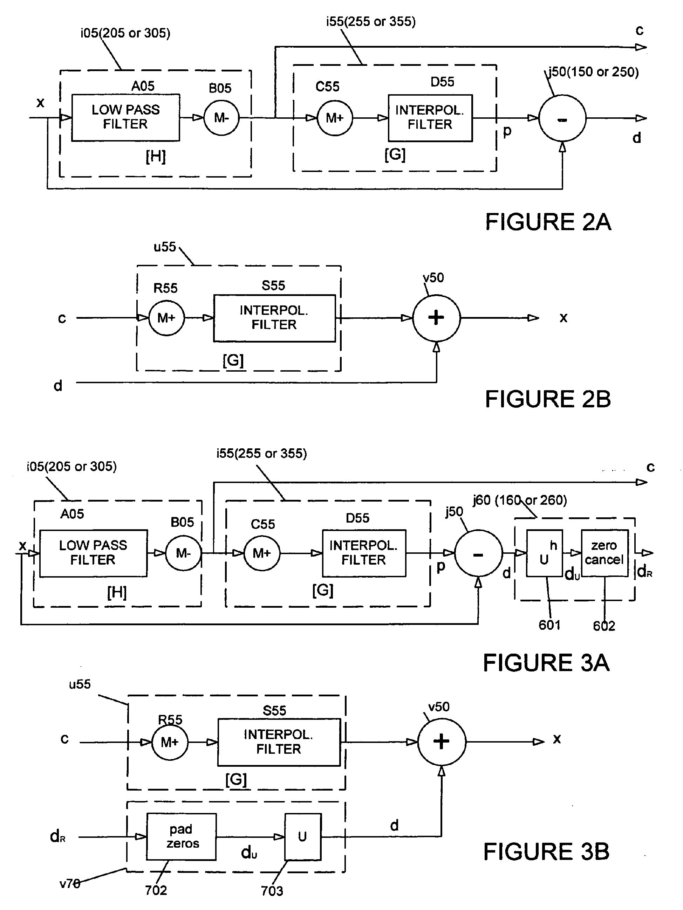

Reference is now made to Figures 2A and 2B. Figure 2A may be viewed as a functional model of the interaction between two layers of Figure 1, while Figure 2 B is a model of the corresponding functions in the decoder. In fact, the functional blocks and/or groups of blocks may also be viewed as representing software code adapted to implement to the relevant function(s).

In Figure 2A, input signal x represents a higher resolution input signal, coming from the upper adjacent layer. Signal x is S1 or S2, i.e. the input signal at any level or layer but the last one, in a Laplacian pyramid decomposition structure like the one of Figure 1.

For purposes of illustration, input signal x is assumed to be a 1D signal, corresponding e.g. to a row or a column (or to a portion of a row or of a column) of signal S1 or S2. For example, signal x can represent a row or a column of the SD or the CIF resolution signals in the ISO/MPEG/JVT SVC coding architecture. This 1D approach can be extended in a straightforward manner by simply considering separately the rows and the columns of the 2D signals (S1 or S2) as such 1D signals.

Input signal x may be defined as a vector (unicolumn matrix) of dimension N. A sample of the signal may be seen as an element of the vector.

Now, as shown in Figure 2A shows a resolution reducer or decimator i05, an interpolator i55, and a predictor j50, with $i \in \{2, 3\}$, and $j = i-1$. To be fully clear, the correspondence with figure 1A or 1B is developed in Table I below.

Decimator i05 comprises a downsampler B05, preceded by a low pass filter A05, serving for anti-aliasing purposes. This converts input signal x from the immediately adjacent upper level into signal c for the current level. Together, downsampler B05 and low pass filter A05 may be represented by matrix H.

Interpolator i55 comprises an upsampler C55 and an interpolation filter D55, which sends a predicted signal p to the upper level. Together, upsampler C55 and interpolation filter D55 may be represented by matrix G.

Finally, at the upper level, predictor j50 may be viewed as a subtractor, which computes a difference signal d.

Table I also shows the correspondence between the notations of signals x, c, p, d in Figure 2A with those of Figures 1A and 1B, depending upon the different levels thereof being concerned. Table I will also apply to further Figures similar to Figures 2A and 2B.

Table I

| Items in e.g. Fig. 2A/2B | Figure 1A or 1B | | Figure 1D | |
|---|---|---|---|---|
| | Levels 1<->2 | Levels 2<->3 | Levels 1<->2 | Levels 2<->3 |
| block "i05" | 205 | 305 | | |
| block "i55" | 255 | 355 | | |
| block "j50" | 150 | 250 | | |
| signal x | S1 | S2 | | |
| signal c | S2 | S3 | | |
| signal p | IXD2 | IXD3 | | |
| signal d | DBD1 | DBD2 | | |
| block "u55" | | | 1255 | 1355 |
| block "v50" | | | 1150 | 1250 |

Figure 2B shows the corresponding structure on the decoding side. It comprises an interpolator block u55, and an adder v50. Table I further shows the correspondence with Figure 1D. In fact, interpolator block u55 is the same as the corresponding interpolator block i55 in Figure 2A. Thus, interpolator block u55 has an upsampler R55 and an interpolation filter S55. Again, together, they may be represented by matrix G.

Considering the lower level first, it is reminded that predictor block 350 delivers a signal DBD3 (hence TDBD3) which is a difference signal in terms of temporal prediction from the previous frames on the same layer. However, signal TDBD3 is in direct form (not in difference form), in terms of spatial contribution, and may be used as such in the decoder.

By contrast, seen from the decoder, the TDBD2 and TDBD1 signals are difference signals, both temporally and spatially.

Thus, referring to Figure 1D :

- using DBD3 to obtain signal c, and DBD2 to obtain signal d, the decoder may reconstruct x as BD2 in block 1250. This uses particular expressions H3 and G3 for matrices H and G, respectively.
- using the reconstructed BD2 as signal c, and DBD1 as signal d, the decoder may reconstruct x as BD1. This uses particular expressions H2 and G2 for matrices H and G.

While the filters themselves **h** and **g** may be the same, matrices H2 and G2 are different from matrices H3 and G3, since they have different dimensions. This will be better understood below on the basis of examples.

Figures 3A and 3B represent a first exemplary embodiment of this invention.

Figure 3A corresponds to Figure 2A, with an additional transform j60 being performed on signal d, to obtain an output signal $d_R$. Transform j60 may be viewed as a first operation in the following post processing block, or a separate operation between the interpolation and the post-processing.

Figure 3B corresponds to Figure 2B, with an additional transform v70 (substantially the reciprocal of transform j60) being performed on received signal $d_R$ to recover signal d.

This invention is based on the observations that :

- transforms j60 exist, which make it possible to reduce the amount of pixel information in d, while substantially keeping the same image information or quality, and
- a such transform j60 may have a reciprocal transform v70.

METHOD 1 - no quantization

A first signal decomposition method (and corresponding reconstruction method) will now be considered. It will be referred to as METHOD 1.

In this METHOD 1, the transform is based on converting the d signal through a selected matrix $U^h$, as illustrated within block 601 of Figure 3A.

This matrix $U^h$ may be stored as a predetermined set of values, suitably identified, with these values being derived from the settings (design parameters) of blocks A05 (in i05) and D55 (in i55). This will now be explained, with reference to the equations in Section 1 of Exhibit 1.

Signal c denotes the output of i05. It will be understood that signal c may be generally expressed by Equation [11], where H is a matrix of dimension K x N. This is shown in the drawings, by the symbol of matrix H being placed within block i05. It should be kept in mind that matrix H represents both A05 and B05. This will be more clear in the description of Examples of Matrices, below.

Thus, with signal x corresponding to S2, the lower resolution signal c corresponds to S3, and verifies Equation [11], with H being a matrix H3 corresponding to the settings of the low pass filter A05 and downsampler B05 in decimator 305 (i05 with i being 3). Similarly, with signal x corresponding to S1, the lower resolution signal c corresponds to S2, and verifies Equation [11]. In this case, H is a matrix H2 corresponding to the settings of the low pass filter A05 and downsampler B05 in resolution reducer 205 (i05 with i being 2).

The notation K is used here for the sake of generality in terms of downsampling and upsampling capabilities. Considering the diagram in Figure 1A or 1B, when the top layer has resolution N, K is N/2 for the middle layer and N/4 for the bottom layer.

Now, in interpolator 255 or 355 (generically denoted i55), the lower resolution signal c can be upsampled and filtered to obtain a prediction p for the higher resolution signal. This signal p will be used in the spatial prediction function of the predictor of the upper layer, i.e. 150 or 250 (generically denoted j50). Thus, block j50 may be viewed as a subtractor, which computes a difference signal d, in accordance with Equation [12], where G is an N x K matrix obtained using the synthesis filter and $I_N$ is the N x N identity matrix.

In the drawings, the symbol of matrix G is placed within block i55, because its contents depend mainly on the settings of its upsampler C55 and of its interpolation filter D55. It should be kept in mind that matrix G represents both C55 and D55. Again, this will be more clear in the description of Examples of Matrices, below.

Generally, there should be no loss of information between the two following resulting signals:

- the original high resolution signal x, filtered and downsampled in i05, and
- the predicted high resolution signal p, upsampled and filtered in i55, in the same conditions as x.

The applicant has observed that this no loss requirement may be verified by METHOD 1, provided that the analysis and the synthesis filters are bi-orthogonal. This is expressed in Equation [13], where $I_k$ is the K x K identity matrix. Hence, one may write Equation [14], in which 0 is the null vector. Equation [14] reflects the fact that the difference signal d contains only the high-pass detail component.

Now, the operator $[I_N - G\ H]$ used in Equation [12] can be decomposed via a singular value decomposition (SVD) according to Equation [15], where :

- U and V are N x N orthogonal matrices,
- the matrix $\Sigma$ is a diagonal matrix of dimension N x N,
- the superscript h designates the hermitian transform (or complex conjugate transpose) of a matrix. Here, superscripts h and t (for "transpose") are equivalent, since real numbers are considered.
  Now, according to Equation [13], we have H G = $I_K$. Thus, the matrix $[I_N - GH]$ has N - K eigenvalues equal to 1, and K eigenvalues equal to zero. Since the matrix $[I_N - GH]$ is of rank N - K, the matrix $\Sigma$ has K diagonal elements equal to 0.
  One can then multiply the difference signal d by a matrix $U^h$, which is the conjugate transpose of the matrix U, to obtain Equation [16]. The resulting signal $d_U$ can be re-written in accordance with Equation [17], where $0_K$ is the null vector of dimension K. Thus, only the N - K samples of the vector $d_R$ need to be transmitted since the other samples are known to be zero. Those skilled in the art will understand that, as a result of the singular value decomposition, the zeros are adjacent, and, also, their positions are fixed: they are the last components.
  For purposes of illustration, Figure 3A shows a separate block 602, cancelling in signal $d_U$ the zeros which correspond to vector $0_K$. Practically, this zero cancelling function will easily be implemented in the same block as the calculation of $d_U$.
  The corresponding signal reconstruction, on the side of the decoder, may be made in accordance with Equation [18]. As shown in Figure 3B, the $d_R$ signal as received is processed in the lower path in block v70, whose functions are the reciprocal of those at transmission, i.e.
- sub-block 702 "pads" or reinstates the zeros which have been cancelled in block 602 at transmission, and
- sub-block 703 operates the transformation by matrix U, which is the reciprocal of matrix $U^h$ as used in block 601 at transmission.

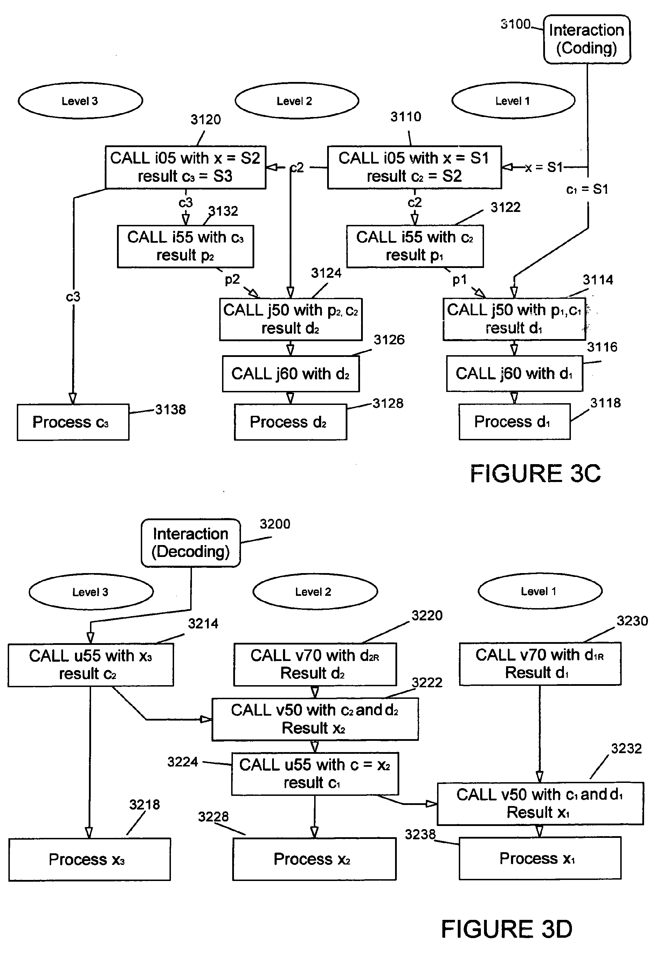

The functions shown in Figure 3A may be implemented as shown in Figure 3C, to meet the needs of the coding architecture of Figure 1A. Resolution reducing is performed twice at 3110 and 3120, possibly with different parameters. Starting from x= S1 = $c_1$, this results in a signal $c_2$ = S2 for level 2, then a signal $c_3$ = S3 for level 3.

Then $c_3$ may be processed at 3138. In parallel, operation 3132 uses $c_3$ to derive $p_2$ for the second level, in which operation 3124 derives difference $d_2$, which is transformed in accordance with this invention at 3126, and then possibly post processed at 3128.

Again in parallel, operation 3122 uses $c_2$ to derive $p_1$ for the first level, in which operation 3114 derives difference $d_1$, which is transformed in accordance with this invention at 3116, and then possibly post processed at 3118.

Thus the functions of Figure 3A are executed once by the group of operations 3110, 3122, 3114 and 3116, and a second time by the group of operations 3120, 3132, 3124 and 3126. Note that the two groups operations may be treated as a single function, called differently twice (or more if more than 3 layers are processed).

The functions shown in Figure 3B may be implemented as shown in Figure 3D, to meet the needs of the decoding architecture of Figure 1D. The interaction from level 3 to level 2 comprises operation 3214, calling function u55 of figure 3B as indicated, and operation 3222, calling function v50 of figure 3B as indicated. Similarly, the interaction from level 2 to level 1 comprise operation 3224, calling again function u55 of figure 3B in a different way, as indicated, and operation 3232, calling again function v50 of figure 3B as indicated. The other operations are intra-level. Operations 3220, 3230 are added in accordance with this invention.

The structure of Figure 3C and/or 3D may be implemented through a monitor function implementing the calls as shown. The blocks may be seen as software procedures. However, the whole structure may be hard coded as well, whether in software or firmware.

Thus, it will be appreciated that the first method, as above described, allows to construct a critically-sampled representation of the signal from the Laplacian pyramid representation.

In the above description, the first method has been described without quantization, i.e. the resolution of the signals in terms of bits is supposed to be very fine so that there is practically no appreciable difference between the signals and their continuous representations.

In practice, a quantization will often occur. This may generate a so-called quantization noise. Alternative embodiments of the first method will now be described, depending upon whether the quantization is within the prediction loop (closed-loop prediction) or, by contrast, outside the prediction loop (open-loop prediction).


METHOD 1 - open loop with quantization

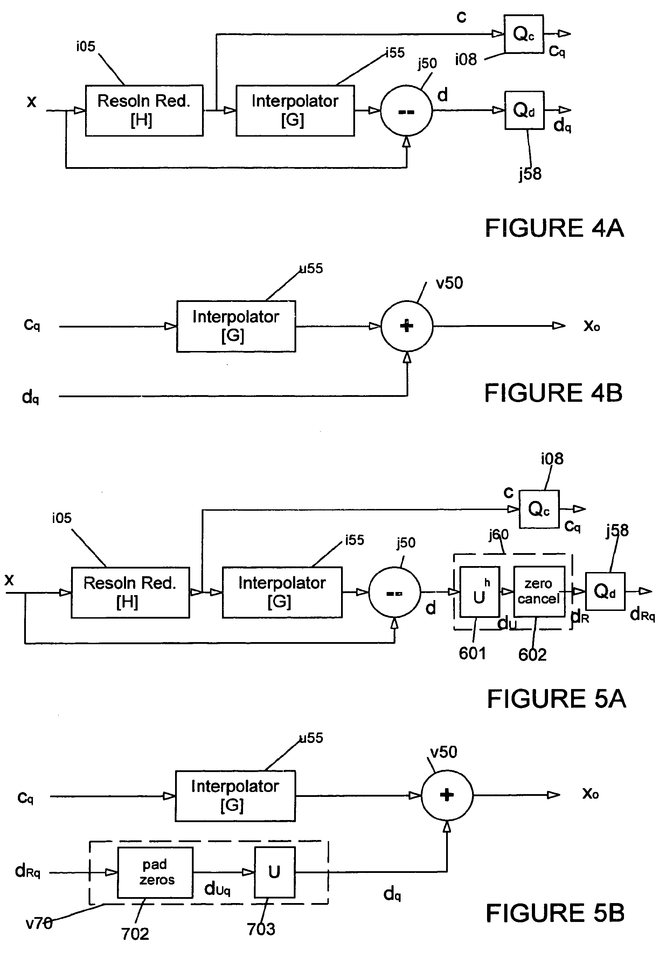

Figure 4A illustrates the model of an open-loop prediction, in which the quantization is outside the loop. Note that in Figures 4A through 9B, the structures of blocks like i05, i55 and k55 are not shown in detail. They may remain the same as in figures 2A and 2B.

Figure 4A functionally differs from Figure 2A in that:

- a first quantizer or Qc block i08 (i.e. 208 or 308) is added as a transformation of signal c into $c_q$, and
- a second quantizer or Qd block j58 (i.e. 158 or 258) is added as a transformation of signal d into $d_q$.

Quantizer Qc i08 reflects the fact that less significant bits will likely be removed after the x signal has been low-pass filtered and down sampled, resulting in a corresponding quantization noise $q_c$ on signal c. Quantizer Qd j58 has the same function with respect to signal d. In practice, the quantizations for the low resolution signal (level 3) and the detail signal (level 1 and/or 2) need not be the same, due to the fact these signals have different properties.

Figures 5A and 5B show how METHOD 1 may be applied in the case of Figures 4A and 4B, i.e. an open loop with quantization. The blocks 601 and 602 (as a whole j60), already discussed in connection with Figure 3A, appear between subtracter j50 and quantizer j58 in Figure 5A. Figure 5B is the same as Figure 3B, shown again to facilitate the understanding.

The existence and positions of the quantizers induces changes in the signals, which will now be considered.

In Figure 5A, after quantization, the low resolution signal $c_q$ is now expressed by Equation [21]. It is thereafter coded and transmitted. Similarly, $d_q$ is now expressed by Equation [22], where $q_d$ is the quantization noise on signal d.

As a consequence, the signal $d_R$ reduced to the non-zero samples of the signal $d_U$ is quantized into $d_{Rq}$ as expressed in Equation [23]. It may then be coded and transmitted.

As shown in block v70 of Figure 5B, the decoder, upon reception of the signal $d_{Rq}$, pads K zeros to reconstruct the signal $d_{Uq}$. It can then multiply the reconstructed signal $d_{Uq}$ by the matrix U to obtain signal $d_q$ as expressed in Equation [24]. Finally, the output signal $x_o$ is a reconstructed estimate of $x_q$ according to Equation [25].

As it appears, in the case of an open-loop prediction, the method may be the same as described in connection with Figures 3A and 3B. The consequence of the quantization is a decoding error in the difference signal due to quantization, expressed as $U q_d$ in Equation [24].

METHOD 1 - closed loop with quantization

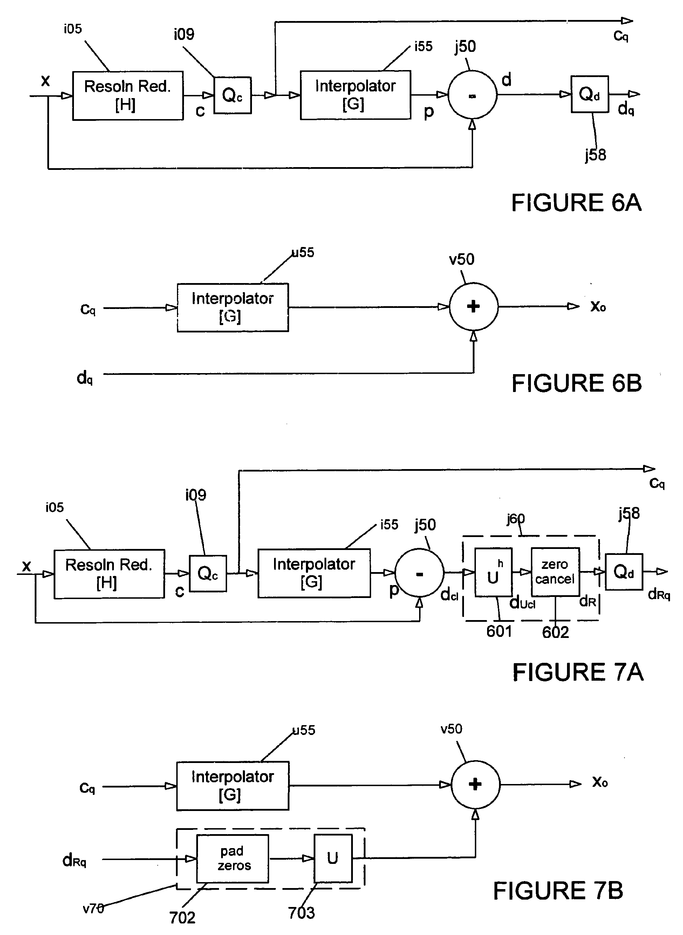

Reference is now made to Figure 6A, which illustrates the case of a closed-loop prediction, in which one of the quantizers is within the loop. It differs from Figure 4A in that the first quantizer or Q block i09 is inserted after block i05, and before signal c is extracted. The position of the second quantizer or Q block j58 is added as a transformation of signal d into $d_q$, the same as in Figure 4A.

Figures 7A and 7B show how METHOD 1 may be applied in the case of Figures 6A and 6B, i.e. a closed loop with quantization. In Figure 7A, block j60 appears between subtracter j50 and quantizer j58. Figure 7B is the same as Figure 5B. Although the structure of Figure 5A and 7A are similar, the existence and positions of the quantizers renders the signals different.

The expression of signal $c_q$ remains the one of Equation [21]. By contrast, the expression of signal $d_q$ will change, since it now "sees" the two quantizers. A corresponding signal $d_{cl}$ is computed as given in Equation [31], in which d is as defined in Equation [12].

Now, since H d = 0, and H G = $I_K$, one may write Equation [32].

Then, left-multiplying Equation [31] by $U^h$ leads to the expression of $d_{Ucl}$ in Equation [33]. Here, $d_{Ucl}$ denotes a modified version of $d_{cl}$.

In Equation [33], $q_{Uc}$ denotes the expansion coefficients of $Gq_c$ with respect to the columns of matrix U.

Since the components of $q_c$ are rather small (quantization noise), the contributions of $Gq_c$ to the K zero coefficients of d are small. As a result, coarser quantization of $d_{cl}$ would force them to be zero. In this case, the decoder will follow the same algorithm as the open-loop approach to recover the difference signal.

Closed loop with quantization emulating open loop with quantization

Another approach to have a critical representation is to perform a kind of emulation, tending to convert the closed loop to an open loop structure. This can be achieved as follows.

It is again reminded that (IN - GH) G = 0. Then, multiplying Eqn. [31] by ($I_N$ - G H) on the left, will result in Equation [34], which summarizes into (IN - GH) $d_{cl}$ = d, since H d = **0**.

In other words, one can convert $d_{cl}$ into d, by left-multiplying $d_{cl}$ by (I - G H). One can then apply the same transform U on the resulting signal d, which turns out to be the same as in the open-loop prediction approach.

The corresponding decoder may operate only along the open loop reconstruction, i.e. Equation [24].

In the above description of METHOD 1, it has been assumed that the analysis and the synthesis filters are bi-orthogonal. In practice, the analysis and the synthesis filters are often orthogonal, it being reminded that orthogonality is a stronger condition than bi-orthogonality, i.e. orthogonality implies bi-orthogonality, but not vice versa. Thus, while the general theory for the Laplacian pyramid does not specify that the two filters have to be orthogonal or bi-orthogonal, in the METHOD 1 being proposed here, at least bi-orthogonality condition is assumed. Using bi-orthogonal or orthogonal filters has the advantage that the energy of the detail signal is minimized. Therefore, a number of practical systems will use filters being at least bi-orthogonal.

Also, the above description of METHOD 1 is based on an 1D approach. For a 2-D signal, the resolution is decreased by first filtering the columns (or rows) and downsampling, and then doing the same for the rows (or columns) of the resulting signal. For interpolation, the columns (or rows) are upsampled and then filtered using the interpolation filter, and then doing the same for the rows (or columns) of the resulting signal. Whether the rows or columns are processed first does not matter.

The corresponding change in the mathematics is shown in section 4 of Exhibit1.

For example, for filtering and downsampling, the change occurring in the above cited Equation [11] is shown in expression [41] : the right member is further multiplied by $H^t$, which is the transposed transform of Matrix H. Those skilled in the art will understand that, for a given 2D area, matrix H will correspond to the transformation of the columns (or column portions), while matrix $H^t$ will correspond to the transformation of the rows (or row portions).

H and $H^t$ are based on the same matrix H, under the usual admission that the desired row and column resolutions are the same. They might be different as well, e.g. $H_c$ and $H_r^t$ for the columns and rows, respectively.

Similarly, for interpolation, the equation defining the interpolated signal p will change in accordance with expression [42], where $G^t$ is the transposed transform of Matrix G.

Those skilled in the art will easily understand how to adapt accordingly the above discussed relations, up to expression [41] exclusive. They will also understand that the bases used and the assumptions made in the 1D case are also valid in the 2D case.

The structure of Figure 3C may apply to Figure 5A or 7A. The structure of Figure 3D may apply to Figure 5B or 7B.

METHOD 2

A second signal decomposition method (and corresponding reconstruction method) will now be considered. It will be referred to as METHOD 2. Like METHOD 1, METHOD 2 is based on the concept that only a subset of the difference signal d is transmitted.

METHOD 2 - open loop with quantization

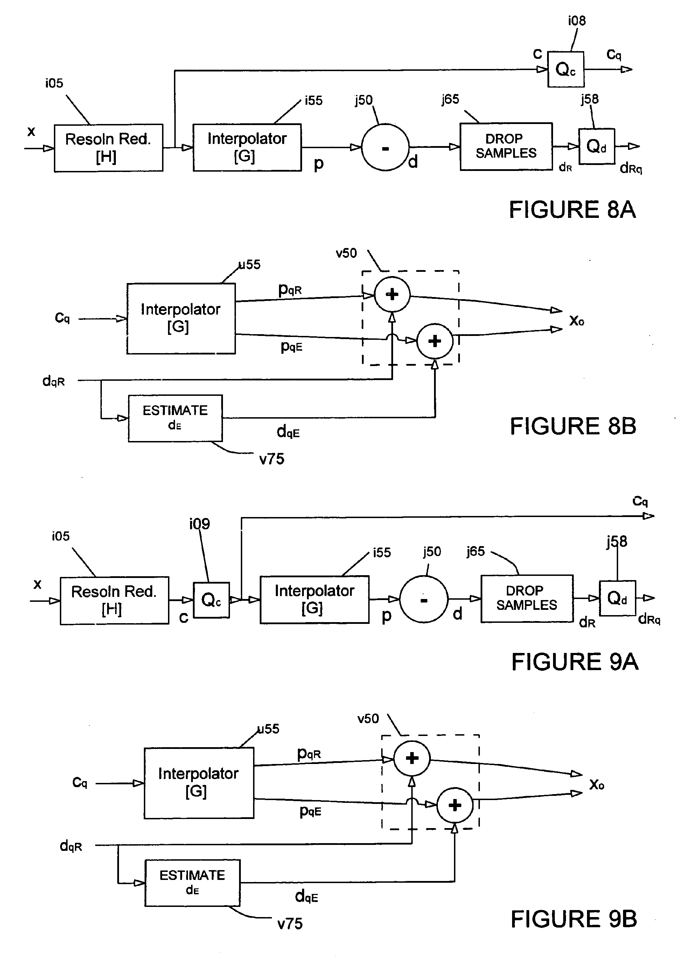

A first, open loop, version of METHOD 2 will now be described with reference to Figures 8A and 8B.

In Figure 8A, block j65 drops certain samples out of signal d, according to a fixed pattern known from the coder and the decoder. Thus, the difference signal (vector) d may be seen as divided into two parts, as expressed in Equation [51], where $d_R$ denotes the vector of transmitted samples, and $d_E$ denotes the vector of dropped samples. The output of quantizer j58, derived from non dropped samples $d_R$, is noted $d_{Rq}$.

In Figure 8B, the decoder receives a quantized version $c_q$ of the low resolution signal, and a quantized version $d_{Rq}$ of a subset $d_R$ of difference signal d.

Block u55 uses the quantized low resolution signal $c_q$ to construct an estimate $p_q$ of the prediction signal p (Equation [52]).

Taking the sample dropping into account (as made at block j 65 in the encoder), $p_q$ has two components $P_{qR}$ and $p_{qE}$, as expressed in Equation [53]. Thus, component $p_{qR}$ is available at the output of block u55, to be added by block v50 to the quantized received subset $d_{Rq}$ of the difference signal d. The corresponding output of block v50 is an estimate of a subset $x_{qR}$ of the input signal samples, as expressed in Equation [54].

There remains to reconstruct the other samples $x_{qE}$ of the input signal. Exemplary ways of doing this will now be described, with reference to Equations in section 6 of Exhibit 1.

The receiver has to reconstruct an output estimate $x_o$ of the input signal affected by the quantization noise on the low resolution signal only. Hence, the reconstructed signal should verify Equation [61], where matrix H is known.

Now, taking the selection between dropped and non-dropped samples into account will change Equation [61] into Equation [62], where $H_E$ denotes the columns of matrix H having the same indices as the dropped samples, and $H_R$ denotes the remaining columns of H (i.e., the columns corresponding to the transmitted samples). If K samples are dropped, $H_E$ is a square matrix. If less than K samples are dropped, $H_E$ is a tall matrix, having more rows than columns. Generally, the recovery of the dropped samples is possible, provided that the columns of $H_E$ are linearly independent, or, in other words, $H_E$ has full column rank.

In the case of an invertible square matrix, the missing samples $x_{qE}$ of the input signal x can be reconstructed as expressed in Equation [63], which is derived from Equation [62] through left multiplication by $H_E^{-1}$. A similar procedure may be used if $H_E$ is a tall matrix.

An alternative way to reconstruct the signal x is to first recover the dropped samples of difference signal.

Equation [64] reminds that H d = 0. That property may be applied to the decomposition between dropped and non-dropped samples, as shown in Equation [65], whose Equation [66] is an equivalent, using again left multiplication by $H_E^{-1}$. Subsequently, the missing samples $x_E$ can be reconstructed according to Equation [67].

The applicant's work has shown that the above two reconstruction schemes may be considered equivalent.

Now, depending on the choice of the sample dropping pattern, the redundancy can vary from non redundancy (critically-sampled representation as in METHOD 1) to increased redundancy which can be up to the one existing in the original Laplacian pyramid (if no sample is being dropped).

The main constraint to the choice of the sample dropping pattern is that the dropped samples should be chosen in such a manner that $H_E$ is invertible.

METHOD 2 - closed loop with quantization

A second, closed loop, version of METHOD 2 will now be described with reference to Figures 9A and 9B.

In the closed-loop structure, encoding and decoding proceed in a similar manner, using the same equations as above (in the Exhibit, the equations in Section 5, and the equations of Sections 1-4 being referred to).

Now, the applicant has observed that, here, the decoder can reconstruct the exact prediction signal p used by the encoder (output of block i55), as expressed in Equation [71].

Then, the subset $x_{qR}$ of input samples may be estimated from the received quantized samples $d_{qR}$, as expressed in Equation [72].

The missing samples $X_E$ are then recovered as in Equation [63].

The closed loop approach verifies Equation [32]. However, $q_c$ is unknown to the decoder. Thus, the alternative scheme described with reference to Equations [64] through [66] for the open loop approach may be used for recovering the missing samples of the difference signal, in the closed loop approach, assuming that $q_c$ substantially equals 0.

However, the applicant has observed that it is still possible to convert the closed loop to an open loop at the encoder, using the above described emulation scheme (section "Closed loop with quantization emulating open loop with quantization" ; Equation [34]).

Then, in the case of Figures 9A and 9B, one may use that emulation, and then follow an open loop reconstruction scheme at the decoder as illustrated above with reference to Figures 8A and 8B, in any of its alternatives.

An estimation error of the samples $x_E$ can also be quantized and transmitted.

Again, depending on the choice of the sample dropping pattern, the redundancy can vary from non redundancy (critically-sampled representation as in METHOD 1) to increased redundancy which can be up to the one existing in the original Laplacian pyramid (if no sample is being dropped).

An illustrative exemplary sample dropping pattern in shown in Table II below, where the rows and columns are referring to a portion of an image. In each cell, "x" stands for kept sample, and "d" for dropped sample.

Table II

|  | column 1 | column 2 | column 3 | column 4 |
|---|---|---|---|---|
| row 1 | d | x | d | x |
| row 2 | x | x | x | x |
| row 3 | d | x | d | x |
| row 4 | x | x | x | x |

METHOD 3

A third method (METHOD 3) will now be described. It may be considered as an alternative of METHOD 2, in which a residue is additionally transmitted.

METHOD 3 is basically applicable to the case of an encoder having a closed loop estimation, i.e. Figures 9A and 9B.

In this case, the encoder may proceed as the decoder.

This means that block i55 in the encoder will compute $p_q$, as it could be seen at the decoder, in accordance with Equation [81], which is the same as Equation [52].

Like in the decoder, the subset $x_{qR}$ of samples of the input signal x to be reconstructed from the transmitted subset $d_{qR}$ of the difference signal samples d may be estimated in accordance with Equation [82], which is the same as Equation [54].

The other samples $x_{qR}$ are then estimated in accordance with Equation [83].

The encoder can thus compute an estimation error $d_e$ as defined in Equation [84]. The estimate error $d_e$ can be quantized as $d_{eq}$, and transmitted or stored in addition to $d_{Rq}$.

The decoder then can reconstruct a corrected $x'_E$, using Equation [85]. This corrected signal is of course closer to the original signal. In this METHOD 3, as above described, the reconstruction error at the missing samples is bound to remain within the quantization interval of the residue signals.

As a counterpart, the coded signal is supplemented with the correction value $d_{eq}$. This tends to increase its redundancy, which remains however less than in the prior art. Actually, by varying the precision of the coded $d_{eq}$, the degree of precision of the resulting x' signal and/or the redundancy may be adjusted.

The structure of Figure 3C may apply to Figure 8A or 9A, provided j 60 is changed into j65 in Figure 3C. The structure of Figure 3D may apply to Figure 8B or 9B, provided v70 is changed into v75 in Figure 3D.

It will be appreciated that methods 2 and 3 allow to flexibly vary the redundancy in the spatial resolution hierarchy from no redundancy (leading to a critically-sampled spatial representation of the signal as METHOD 1) to the redundancy inherent to the initial Laplacian pyramid structure.

Methods 2 and 3 may thus be viewed as an adjustable way of varying the redundancy, while Method 1 may be seen as a way to directly reach a critically-sampled spatial representation of the signal. All these methods are based on common observations concerning properties of the resolution reducer and of the interpolation filters. So they may be seen as related, although no model relating them has been found yet.

Any of the above methods, or combinations thereof, can be used as a postprocessing step applied on the signals derived from the pyramid structure currently used in the ISO/MPEG/JVT SVC coding architecture. The input spatial resolution hierarchy, being non redundant (for METHOD 1), allows to achieve higher compression efficiency for the spatial resolutions above the base layer (that is CIF and SD).

The methods apply directly to open-loop spatial prediction structures. An additional transform (or emulation) operation has been proposed to make them also applicable to closed-loop prediction structure. This emulation step allows to make equivalent open-loop and close-loop prediction structures, and may be used in other contexts than that of this invention.

Finite Border Effect Management

An image may be seen as a finite dimensional signal. Thus, the filtering matrix H (accompanying the downsampling) will be given dimension K x (N + $\ell$), and the matrix G (accompanying the oversampling and interpolation) will be given dimension (N + $\ell$) x K, where $\ell$ is the order of the longer filter. This makes it possible that the bi-orthogonality condition, i.e. H G = I, holds good.

This results in the requirement that the input signal x be extended by $\ell$ at the borders of the image. This is typically done by extending the image being considered through mirror symmetry. Other applicable solutions are known from those skilled in the art. Consequently, the higher resolution detail signal d (and its transform) will have dimensions equal to (N + $\ell$) instead of N.

However, the number of zero components of d is still K. Thus, the encoder needs to transmit (N - K + $\ell$) coefficients for the decoder to be able to fully reconstruct the detail signal d.

The transmission of the $\ell$ additional coefficients can be avoided by truncating the filtering matrices H and G to dimensions K x N and N x K, respectively, before applying the singular value decomposition. This process results in HG $\approx$ I, instead of HG = I. Thus the K zero coefficients of d are very close to zero instead of being equal to zero. Since the components of d are quantized before transmission, these coefficients very close to zero are actually quantized to zero, and thus do not actually require to be transmitted. Practically, this results in a marginal degradation of the signal, which thus remains better than in accordance with the prior art.

Alternative embodiments

In Figures 1A or 1B, signal S3 is built from signal S2 using decimation by 2. Alternatively, signal S3 may be seen as built from signal S1, using decimation by 4. The model of Figures 2A - 9B remains directly applicable, provided that the filters (basically anti-aliasing low pass filters) being used to construct signals S2 and S3 from S1 have equivalent filters, when constructing S2 from S1 and then S3 from S2. However, where signals S2 and S3 would be separately derived from signal S 1, non-equivalent anti-aliasing low pass filters may be used for S2 and S3. If so, formulating the upsampling is more complex.

Examples of Matrices

Examples of matrices will now be given, considering the case of a Daubechies 9/7 filter, as described in the above cited Christopoulos et al. publication.

As known from those skilled in the art, the denomination "9-7 filter" aims at a numeric low-pass filter of length 9, and a numeric interpolation filter of length 7.

Saying that the low-pass filter has length 9 means that its impulse response has only 9 nonzero values. It may thus be denoted according to Expression [91], where **h** is the impulse response of the filter.

In Expression [91], the square brackets frame a sequence of real numbers (as real numbers can be represented in calculation tools), i.e. the impulse response is nothing but a sequence of numbers. The actual values of these numbers may be determined on the basis of the design parameters of the actual filter being considered. Exemplary values for the 9-7 filter coefficients are provided e.g. in Christopoulos et al.

Now, when an input signal (another sequence of numbers) is passed through a filter, the output of the filter depends on the input signal and the impulse response of the filter. As known from those skilled in the art, the output is obtained by the 'convolution' of the input signal and the impulse response. This 'convolution' involves some multiplications and additions with the two sequences of numbers. Such a convolution operation can be equivalently expressed as a matrix multiplication of the input signal (expressed as a column vector) and a matrix whose elements are the impulse response values. An example is shown in Equation [11].

For an anti-aliasing lowpass filter (length 9) included in block 205 or 305, an exemplary filter matrix is given as Expression [92].

Since block 205 or 305 also downsamples the output by 2, the matrix H itself is obtained by removing the alternate rows in Expression [92]. The result is shown in Expression [93].

Note that the H matrix includes the downsampling operation. Hence Equation [11], written as : c = H x , where c is the output after the down-sampler, and other similar equations.

The interpolation lowpass filter (length 7) included in block 255 or 355, may be considered similarly. Its impulse response **g** can be denoted according to Expression [94]. A corresponding exemplary filter matrix is given as Expression [95].

Since the signal is first upsampled in block 255 or 355, its alternate samples are zero (before interpolation). This corresponds to removing the alternate columns from the matrix [94].The result is shown in Expression [96].

Note also that the G matrix includes the upsampling operation. Hence the use of : p = G c in e.g. Equation [42], and other similar equations, including Equation [12] (implicitly, since p does not appear).

Consider now the H matrix of Expression [93], and remove alternate columns from it. It appears the result is an upper triangular matrix, which is known to be an invertible matrix. As a consequence, in METHOD 2, the pattern of alternate sample dropping (of Table II) is recoverable. Of course, this is not the only recoverable pattern, and those skilled in the art will understand how to find other recoverable patterns, based on similar considerations.

Applications

In the above description, this invention has been described in connection with video signals. Now, to the extent it mainly reduces the spatial redundancy, the invention may apply to stationary images as well.

Thus, experiments have been made using such stationary images, in fact the reference image known as LENA, and used in many instances, available e.g. at

http://www.cs.cmu.edu/~chuck/lennapg/lenna.shtml

The image was encoded using a Laplacian pyramid with 2 levels. In all cases, the coarse base layer was encoded using a JPEG-like algorithm. The two higher resolution detail layers were scalar quantized and then entropy-coded. These two higher resolution detail layers were :

- transformed difference layers for METHOD 1 (open loop with quantization), and
- subset of difference pixels for METHOD 2 (open loop with quantization).

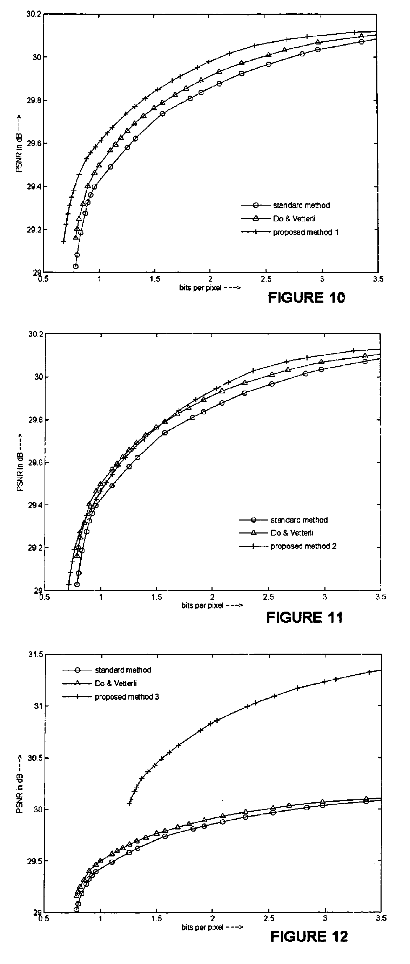

Figures 10-12 show the achievable Peak Signal-to-Noise ratio (PSNR, in dB) of the LENA image versus its bit rate (bits per pixel), in several ones of the above proposed configurations.

In Figures 10-12:

- the curve labeled "Standard Method" corresponds to the standard Laplacian Pyramid reconstruction code, as defined in the above cited "Framing pyramid" publication of Do and Vetterli,
- the curve labelled "Do & Vetterli" corresponds to the so called "pseudo-inverse structure" method described in the same Do and Vetterli publication,
- the third curve corresponds to a method as proposed here, using a Daubechies 9/7 filter, as described in the above cited Christopoulos et al. publication.

In Figure 10, the third curve uses METHOD 1. It shows better than known methods in all cases (it is reminded that the vertical scale is in dB, i.e. logarithmic).

In Figure 11, the third curve uses METHOD 2. It shows the following :

- better than known methods for bit rates below about 0,8 bit per pixel,
- comparable to the DO & VETTERLI method (best known method) for bit rates between about 0,8 and about 1,5 bit per pixel,
- better than known methods for bit rates above about 1,5 bit per pixel.

In Figure 12, the third curve uses METHOD 3 (i.e. METHOD 2 plus transmission of the residue, with the residue being also scalar quantized and entropy coded). It shows much better than known methods in all cases (note that the vertical scale is higher than the ones of Figures 10-11).

The curves show that it is possible to have better quality of the decoded image at a given bit rate, or equivalently, the image can be compressed with lesser number of bits at the same quality.

Application to the ISO/MPEG/JVT SVC context

The above described methods may apply to the scalable video coding standard being defined by ISO/MPEG/JVT group, as it will now be considered.

They apply first naturally in the intra-coded frames in the different layers (but the lower spatial resolution layer). In each block of the intra-coded image for which a difference signal is computed via a spatial closed-loop prediction from the lower spatial resolution (or lower layer), a modified difference signal is computed according to METHOD 1. This modified signal contains a reduced number of samples (only 3/4 of the number of samples contained in the original difference signal). This modified difference signal can then be coded as described in the standard via the spatial block transform and the progressive texture refinement tools (blocks 170, 270 and 370 in Figure 1A or 1B).

Basically, a video signal as proposed may be transmitted, or stored for being transmitted. "Transmitted" here means made available to user equipment by any means.

However, other applications are possible, in which the above mentioned known steps ofpost processing (transforms + entropy coding) are not necessary, or may be different.

For example, the presented methods have high potential for use in image indexing and retrieval applications.

Such applications typically store huge image databases in a compressed format, in order to minimize the requirement of space. On the request for retrieval of some images specified by certain features and descriptions, e.g. metadata, the entire database needs to be decompressed since the features and descriptors are not shift-invariant in the compressed domain. In order to facilitate shift-invariance, presently the feature point extraction and the description are being performed in the Gaussian pyramid domain. This, on the other hand, requires images to be represented as Gaussian pyramids, which are highly redundant.

A possible compromise between these two contradictory requirements is to express the Gaussian pyramids as Laplacian pyramids, which still preserves the shift-invariance, and then to compress the Laplacian pyramids. Then, upon an image retrieval query, the application has to only decompress the detail components, which would be faster than decompressing entire images as done in the prior art.

This invention may be expressed in terms of coder and/or decoder apparatus. It may also be expressed in terms of image signal processing apparatus, since the invention is not restricted to applications involving a transmission of the coded signal, and a reception of the coded signal in a remote decoder. For example, the invention may also be useful in image, multimedia (image + sound) or video storage applications.

Similarly, this invention may be expressed in terms of coding and/or decoding methods, and also in terms of image/video signal processing methods.

The scope of such methods and/or apparatuses extend to the resulting coded signal, to the extent it is novel as such and/or obtained in accordance with this invention.

Finally, it will be understood that implementing the invention may necessitate the use of software code, at least partially, e. as shown in Figures 3C and/or 3D. In this regard, this invention also covers the corresponding software code itself, especially when made available on any appropriate computer-readable medium. The expression "computer-readable medium" includes a storage medium such as magnetic or optic, as well as a transmission medium such as a digital or analog signal.

Such software code may basically include :

- the improved processing as described at the coding level, i.e. functions corresponding or similar to those of Figures 3A, 5A, 7A or 9A, and/or
- the modified decoding scheme, where appropriate, i.e. functions corresponding or similar to those of Figures 3B, 5B, 7B or 9B.

The description above mainly refers to a three layer embodiment of this invention, in which the 3rd layer is the lowest resolution layer. More generally, the invention is applicable to any number n of layers, starting with n = 2 (hence n > 1). In a minimum structure with n = 2, there would be only two layers 2.1 and 2.2. Such a two-layer structure can be seen in different ways on Figures 1A and 1B, including, *inter alia* :

- the second layer 2.2 corresponds to the third layer, as shown in e.g. Figure 1A or 1B ; and
- the first layer 2.1 may be viewed in two ways (omitting motion coding):

   a. either as the first layer, as shown in e.g. Figure 1A or 1B , however connected to the second layer 2.2 via resolution reducer block 205 only, and with interpolator 355 interacting directly with predictor 150,
   b. or as the second layer, as shown in e.g. Figure 1A or 1B , however directly fed with input signal 10, and deprived from the connection to interpolator 255.

In certain of the appended claims, the reference numerals to the drawings are selected along option b. above. This is because establishing the reference numerals according to all possibilities would be much confusing, by introducing considerable discrepancies between the layer ordering in the claims and that in the description. This does not exclude that the claims be read on the specification, e.g. Figure 1A or 1B, along other possibilities than option b., including option a.

**Exhibit 1**

**Section 1**

$$c = Hx \tag{11}$$

$$d = x - Gc = [I_N - GH]x \tag{12}$$

$$HG = I_K \tag{13}$$

$$Hd = H(I_N - GH)x = \mathbf{0} \tag{14}$$

$$[I - GH] = U\Sigma V^h \tag{15}$$

$$d_U = U^h d = U^h[I - GH]x = U^h U\Sigma V^h x = \Sigma V^h x \tag{16}$$

$$d_U = \begin{pmatrix} d_R \\ 0_K \end{pmatrix} \tag{17}$$

$$Ud_U = UU^h d = d \tag{18}$$

**Section 2**

$$c_q = c + q_c \tag{21}$$

$$d_q = d + q_d \tag{22}$$

$$d_{Rq} = d_R + q_{d_U} \tag{23}$$

$$Ud_q = UU^h d + Uq_d = d + Uq_d \tag{24}$$

$$x_q \; = \; c_q \; + \; d_q \qquad\qquad (25)$$

**Section 3**

$$d_{cl} \; = \; x \; - \; G\,c_q \; = \; x \; - \; G\,(c \; + \; q_c) \; = \; d \; - \; G\,q_c \qquad\qquad (31)$$

$$H\,d_{cl} \; = \; -q_c \qquad\qquad (32)$$

$$d_{U\,cl} \equiv U^h d_{cl} = U^h d - U^h G q_c = \begin{pmatrix} d_R \\ 0_K \end{pmatrix} - q_{U_c} \qquad\qquad (33)$$

$$(I - GH)d_{cl} = (I - GH)(d - G q_c) = (I - GH)d = d \qquad\qquad (34)$$

**Section 4**

$$c = Hx \;\rightarrow\; c = Hx H^t \qquad\qquad (41)$$

$$p = Gc \;\rightarrow\; p = Gc G^t \qquad\qquad (42)$$

**Section 5**

$$d = \begin{pmatrix} d_R \\ d_E \end{pmatrix} \qquad\qquad (51)$$

$$p_q = Gc_q \qquad\qquad (52)$$

$$p_q = \begin{pmatrix} p_{qR} \\ p_{qE} \end{pmatrix} \qquad\qquad (53)$$

$$x_{qR} = p_{qR} + d_{qR} \qquad\qquad (54)$$

**Section 6**

$$Hx_q = c_q \qquad (61)$$

$$H_E\, x_{qE}\; +\; H_R\, x_{qR}\; =\; c_q \qquad (62)$$

$$x_{qE}\; =\; H_E^{-1}\,(c_q\; -\; H_R\, x_{qR}) \qquad (63)$$

$$H\,d\; =\; \mathbf{0} \qquad (64)$$

$$H_E\, d_{qE}\; +\; H_R\, d_{qR}\; =\; \mathbf{0} \qquad (65)$$

$$d_{qE}\; =\; -H_E^{-1}\, H_R\, d_{qR} \qquad (66)$$

$$x_{qE}\; =\; p_{qE}\; +\; d_{qE} \qquad (67)$$

**Section 7**

$$p_q\; =\; G\,c_q\; =\; \begin{pmatrix} p_{qR} \\ p_{qE} \end{pmatrix} \qquad (71)$$

$$x_{qR}\; =\; p_{qR}\; +\; d_{qR} \qquad (72)$$

**Section 8**

$$p_q\; =\; G\,c_q \qquad (81)$$

$$x_{qR}\; =\; p_{qR}\; +\; d_{qR} \qquad (82)$$

$$x_{qE} = H_E^{-1}(c_q - H_R x_{qR}) \qquad (83)$$

$$d_e = x_E - x_{qE} \qquad (84)$$

$$x'_E = x_{qE} + d_{eq} \qquad (85)$$

**Section 9**

$$\mathbf{h} = [h_0, h_1, h_2, h_3, h_4, h_5, h_6, h_7, h_8] \qquad (91)$$

$$\begin{bmatrix} h_8 & h_7 & h_6 & h_5 & h_4 & h_3 & h_2 & h_1 & h_0 & 0 & 0 & 0 & \ldots & 0 \\ 0 & h_8 & h_7 & h_6 & h_5 & h_4 & h_3 & h_2 & h_1 & h_0 & 0 & 0 & \ldots & 0 \\ 0 & 0 & h_8 & h_7 & h_6 & h_5 & h_4 & h_3 & h_2 & h_1 & h_0 & 0 & \ldots & 0 \\ \cdots & & & & & & & & & & & & & \\ \cdots & & & & & & & & & & & & & \\ 0 & 0 & & & \cdots & & & & 0 & h_8 & \ldots & h_1 & h_0 \end{bmatrix} \qquad (92)$$

$$H = \begin{bmatrix} h_8 & h_7 & h_6 & h_5 & h_4 & h_3 & h_2 & h_1 & h_0 & 0 & 0 & 0 & \ldots & 0 \\ 0 & 0 & h_8 & h_7 & h_6 & h_5 & h_4 & h_3 & h_2 & h_1 & h_0 & 0 & \ldots & 0 \\ \cdots & & & & & & & & & & & & & \\ \cdots & & & & & & & & & & & & & \\ 0 & 0 & & & \cdots & & & & 0 & h_8 & \ldots & h_1 & h_0 & 0 \end{bmatrix} \qquad (93)$$

$$\mathbf{g} = [g_0, g_1, g_2, g_3, g_4, g_5, g_6] \qquad (94)$$

$$\begin{bmatrix} g_6 & g_5 & g_4 & g_3 & g_2 & g_1 & g_0 & 0 & 0 & 0 & \ldots & 0 \\ 0 & g_6 & g_5 & g_4 & g_3 & g_2 & g_1 & g_0 & 0 & 0 & \ldots & 0 \\ 0 & 0 & g_6 & g_5 & g_4 & g_3 & g_2 & g_1 & g_0 & 0 & \ldots & 0 \\ \cdots & & & & & & & & & & & \\ \cdots & & & & & & & & & & & \\ 0 & 0 & & \cdots & & & & 0 & g_6 & \ldots & g_1 & g_0 \end{bmatrix} \qquad (95)$$

$$G = \begin{bmatrix} g_6 & g_4 & g_2 & g_0 & 0 & 0 & \ldots & 0 \\ 0 & g_5 & g_3 & g_1 & 0 & 0 & \ldots & 0 \\ 0 & g_6 & g_4 & g_2 & g_0 & 0 & \ldots & 0 \\ \multicolumn{8}{c}{\dotfill} \\ \multicolumn{8}{c}{\dotfill} \\ 0 & 0 & \ldots\ldots & 0 & g_5 & g_3 & g_1 \end{bmatrix} \qquad (96)$$

**Claims**

1. An image processing apparatus, comprising :

    - a resolution reducer (305), for deriving a lower resolution input image signal (S3) from an upper resolution input image signal (S2),
    - an interpolator (355), for producing an upper resolution predicted signal (IXD3) from said lower resolution input image signal (S3, BD3),
    - an upper resolution predictor (250), for delivering an upper resolution difference signal (DBD2) from said upper resolution input image signal (S2, BD2) and from said upper resolution predicted signal (IXD3),

    wherein

    - said apparatus further comprises a selected transform (j60 ; j65), capable of changing said upper resolution difference signal (d, DBD2) into a modified difference signal, in which samples are at least partially discarded according to a given scheme,
    - the given scheme being selected such that the original upper resolution difference signal (DBD2) is substantially recoverable from the modified difference signal.

2. The image processing apparatus of claim 1, wherein :

    - said resolution reducer (205, 305) is further arranged for deriving said upper resolution input image signal (S2) from a higher resolution input image signal (S1),

    said apparatus further comprising :

    - another interpolator (255), interacting with said upper resolution predictor (250), for producing a higher resolution predicted signal (IXD2), and
    - a higher resolution predictor (150), for delivering a higher resolution difference signal (DBD1) from said higher resolution input image signal (S1, BD1) and from said higher resolution predicted signal (IXD2),
    - another selected transform (j60 ; j65), capable of changing said higher resolution difference signal (d, DBD1) into a modified difference signal, in which samples are at least partially discarded according to a given scheme,
    - the given scheme being selected such that the original upper resolution difference signal (DBD1) is substantially recoverable from the modified difference signal.

3. The image processing apparatus of claim 1 or 2, wherein the selected transform (j60, j65) is selected to meet a given condition related to at least one of : the parameters of the resolution reducer (i05) and the parameters of the interpolator (i55).

4. The image processing apparatus of claim 3, wherein the selected transform (j60) comprises a pre-transform (601) and a zero-cancelling (602), the parameters of said pre-transform being derived from the parameters of the resolution reducer and the parameters of the interpolator.

5. The image processing apparatus of claim 4, wherein the parameters of said pre-transform are derivable from the parameters of the resolution reducer and the parameters of the interpolator via a singular value decomposition of matrix representations thereof.

**6.** The image processing apparatus of claim 5, wherein the parameters of said pre-transform are derivable from a selected matrix derivable from the leftmost matrix (U) in the singular value decomposition of I - GH, where G is a matrix derivable from the interpolation parameters, H is a matrix derivable from the parameters of the resolution reducer, and I is the unity matrix having the same rank as the matrix product GH.

**7.** The image processing apparatus of claim 3, wherein the selected transform comprises dropping samples (j65) according to a selected pattern, the selected pattern being such that the combination of the dropped samples with a matrix H derivable from the parameters of the resolution reducer results in an invertible matrix ($H_E$).

**8.** The image processing apparatus according to any one of the preceding claims, wherein the selected transform further comprises supplementing the modified difference signal with a representation of the residual difference between the original upper resolution difference signal (DBD2) and the modified difference signal.

**9.** The image processing apparatus according to any one of the preceding claims, said apparatus further comprising :

  - a motion discriminator (110, 210, 310), preceding each predictor (150, 250, 350), and
  - separate motion processing functions (180, 280, 380).

**10.** The image processing apparatus according to any one of the preceding claims, arranged as a coder, said apparatus further comprising :

  - a post-processor (170, 270, 370), following each predictor (150, 250, 350), and
  - an output builder (890) arranged for multiplexing the output signals of the post-processors.

**11.** An image signal processing method, comprising the steps of :

  - reducing (305) the resolution of an upper resolution input image signal (S2) into a lower resolution input image signal (S3),
  - interpolating (355) said lower resolution image signal (S3, BD3) into an upper resolution predicted signal (IXD3),
  - producing (250) an upper resolution difference signal (DBD2) from said upper resolution input image signal (S2, BD2) and from said upper resolution predicted signal (IXD3),

  said method further comprising the step of :

  - converting (j60, j65) said upper resolution difference signal (d, DBD2) into a modified difference signal, in which samples are discarded according to a given scheme, the given scheme being selected such that the original upper resolution difference signal (DBD2) is substantially recoverable from the modified difference signal.

**12.** The method of claim 11, further comprising the steps of :

  - reducing (205) the resolution of a higher resolution input image signal (S1) into said upper resolution input image signal (S2),
  - interpolating (255) said upper resolution image signal (S2, BD2) into a higher resolution predicted signal (IXD2), and
  - producing (150) a higher resolution difference signal (DBD1) from said higher resolution input image signal (S1, BD1) and from said higher resolution predicted signal (IXD2),
  - converting (j60 ; j65) said higher resolution difference signal (d, DBD1) into a modified difference signal, in which samples are at least partially discarded according to a given scheme, the given scheme being selected such that the original upper resolution difference signal (DBD1) is substantially recoverable from the modified difference signal.

**13.** The method of claim 11 or 12, wherein the selected transform (j60, j65) is selected to meet a given condition related to at least one of : the parameters of the resolution reducing (205, 305) and the parameters of the interpolation (150, 250).

**14.** The method of claim 13, wherein the selected transform (j60) comprises a pre-transform (601) and a zero-cancelling (602), the parameters of said pre-transform being derived from the parameters of the resolution reducing and the parameters of the interpolation.

**15.** The method of claim 14, wherein the parameters of said pre-transform are derivable from the parameters of the resolution reducing and the interpolation parameters via a singular value decomposition of matrix representations thereof.

**16.** The method of claim 15, wherein the parameters of said pre-transform are derivable from a selected matrix derivable from the leftmost matrix (U) in the singular value decomposition of I - GH, where G is a matrix derivable from the interpolation parameters, H is a matrix derivable from the parameters of the resolution reducer, and I is the unity matrix having the same rank as the matrix product GH.

**17.** The method of claim 13, wherein the selected transform comprises dropping samples (j65) according to a selected pattern, the selected pattern being such that the combination of the dropped samples with a matrix H derivable from the parameters of the resolution reducer results in an invertible matrix ($H_E$).

**18.** The method according to any one of claims 11 through 17, further comprising the steps of :

- discriminating (110, 210, 310) motion feature data in each input signal, and
- separately processing such motion feature data (180, 280, 380).

**19.** The method according to any one of claims 11 through 18, further comprising the steps of :

- post-processing (170, 270, 370) the resulting signal at each resolution, and
- building (890) an output signal from such post-processed signals.

**20.** The method according to any one of claims 11 through 19, further comprising the step of:

- supplementing the modified difference signal with a representation of the residual difference between the original upper resolution difference signal (DBD2) and the modified difference signal.

**21.** A decoder, in particular for use in decoding an image signal as delivered by the apparatus according to any one claims 1 through 10, said decoder comprising :

- a lower resolution reverse predictor (1350), capable of recovering a developed lower resolution signal (BD3) from an input prediction-coded lower resolution signal (DBD3),
- an interpolator (1355), capable of interacting with said lower resolution reverse predictor (1350), for producing an upper resolution predicted signal, and
- an upper resolution reverse predictor (1250), capable of delivering an upper resolution developed signal (BD2) from said upper resolution predicted signal and from an upper resolution difference signal (DBD2),

wherein :

- said decoder further comprises a selected reverse transform (v70 ; v75), capable of changing said upper resolution difference signal (DBD2) into a completed upper resolution difference signal, in which samples are reinstalled according to a given scheme,
- said upper resolution reverse predictor (1250) delivering the upper resolution developed signal (BD2) from said upper resolution predicted signal and from said completed upper resolution difference signal (DBD2).

**22.** A decoding method, in particular for use in decoding an image signal as delivered by the method according to any one of claims 11 through 20, said decoding method comprising the steps of :

- reverse predicting (1350) a developed lower resolution signal (BD3) from an input prediction-coded lower resolution signal (DBD3),
- interpolating (1355) said developed lower resolution signal into an upper resolution predicted signal,
- reverse converting (v70 ; v75) an upper resolution difference signal (DBD2) into a completed upper resolution difference signal, in which samples are reinstalled according to a given scheme, and
- reverse predicting (1250) a developed upper resolution signal (BD2) from said upper resolution predicted signal and from said completed upper resolution difference signal (DBD2).

**23.** A image processing tool, comprising :

- a first function (i05), adapted to receive a representation of an input image signal (x), and capable of delivering a representation of a reduced resolution image signal (c) therefrom,
- a second function (i55), adapted to receive a representation of a given resolution image signal (c), and capable of delivering a representation of an increased resolution predicted signal (p) therefrom,
- a third function (j50), adapted to receive representations of two image signals (x, c) having the same resolution, and capable of delivering a representation of a difference signal (d) therefrom, and
- a monitor function (3100), capable of calling (3120) said first function (i05) with a given input signal, calling (3132) said second function (i55) with the result given by said first function, and calling (3124) said third function (j50) with both said given input signal and the result given by said second function,

wherein :

- said third function is supplemented with a fourth function (j60 ; j65), adapted to receive said representation of a difference signal (d), and capable of delivering a representation of a modified difference signal ($d_R$ ; $d_{Rq}$), by at least partially discarding samples from said difference signal according to a given scheme,
- the given scheme being selected such that the original difference signal (d) is substantially recoverable from the modified difference signal.

**24.** The image processing tool of claim 23, for processing more than two resolutions, wherein said monitor function (3100) is arranged for :

   a. repetitively (3110, 3120) calling said first function (105) to obtain a plurality of representations of image signals having decreasing resolutions,
   b. calling (3132) said second function (i55) with the representation of the last image signal in said plurality, and then calling (3124) said third function (j50) with both the result currently given by the second function and the preceding image signal in said plurality, and
   c. repeating step b. at least once (3122, 3114), starting with the representation of the penultimate image signal in said plurality.

**25.** The image processing tool of claim 23 or 24, wherein the fourth function (j60, j65) is adjustable to substantially meet a given condition related to at least one of : parameters of the first function (i05) and parameters of the second function (j50).

**26.** The image processing tool of claim 25, wherein the fourth function (j60) comprises a pre-transform (601) and a zero-cancelling (602), the parameters of said pre-transform being derived both from parameters of the first function (i05) and parameters of the second function (j50).

**27.** The image processing tool of claim 26, wherein the parameters of said pre-transform are derivable from parameters of the first function (i05) and parameters of the second function (j50) via a singular value decomposition of matrix representations thereof.

**28.** The image processing tool of claim 27, wherein the parameters of said pre-transform are derivable from a selected matrix derivable from the leftmost matrix (U) in the singular value decomposition of I - GH, where G is a matrix derivable from the interpolator parameters, H is a matrix derivable from the parameters of the resolution reducer, and I is the unity matrix having the same rank as the matrix product GH.

**29.** The image processing tool of claim 25, wherein the fourth function (j65) is arranged for dropping samples according to a selected pattern, the selected pattern being such the combination of the dropped samples with a matrix H derivable from the parameters of the first function results in an invertible matrix ($H_E$).

**30.** An image processing tool, comprising :

   - functions (u55, v50), adapted to construct a representation of a developed image signal (x), from representations of a developed input at a lower resolution, and of a difference input at a higher resolution,

   said functions further comprising :

   - a supplemental function (v70 ; v75), adapted to first convert receive said representation of the difference input at a higher resolution, in accordance with a predetermined transform,
- said predetermined transform being adapted to substantially recover an original difference signal, from which said difference input derives by at least partially discarding samples from said difference signal according to a given scheme.

31. The image processing tool of claim 30, wherein the predetermined transform (v70, v75) is selected to meet a given condition at least partially related to the parameters of the said first mentioned functions (u55).

32. The computer program product for use in the apparatus according to any of claims 1 through 10.

33. The computer program product for implementing the method according to any of claims 11 through 20.

34. The computer program product for use in the apparatus according to claim 21.

35. The computer program product for implementing the method according to claim 22.

FIGURE 1A

26

FIGURE 1B

FIGURE 1C

EP 1 775 957 A1

FIGURE 1D

FIGURE 2A

FIGURE 2B

FIGURE 3A

FIGURE 3B

FIGURE 3C

FIGURE 3D

FIGURE 4A

FIGURE 4B

FIGURE 5A

FIGURE 5B

FIGURE 6A

FIGURE 6B

FIGURE 7A

FIGURE 7B

i08

c → Q$_c$ → C$_q$

i05

x → Resoln Red. [H] → Interpolator [G] → p → (−) → d → DROP SAMPLES → d$_R$ → Q$_d$ → d$_{Rq}$

i55    j50    j65    j58

**FIGURE 8A**

v50

C$_q$ → Interpolator [G] → p$_{qR}$ → (+) → X$_o$

u55    p$_{qE}$ → (+)

d$_{qR}$ → ESTIMATE d$_E$ → d$_{qE}$

v75

**FIGURE 8B**

C$_q$

i09

i05

x → Resoln Red. [H] → c → Q$_c$ → Interpolator [G] → p → (−) → d → DROP SAMPLES → d$_R$ → Q$_d$ → d$_{Rq}$

i55    j50    j65    j58

**FIGURE 9A**

v50

C$_q$ → Interpolator [G] → p$_{qR}$ → (+) → X$_o$

u55    p$_{qE}$ → (+)

d$_{qR}$ → ESTIMATE d$_E$ → d$_{qE}$

v75

**FIGURE 9B**

FIGURE 10

FIGURE 11

FIGURE 12

**European Patent Office**

## EUROPEAN SEARCH REPORT

Application Number

EP 05 29 2167

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DO M N ET AL: "FRAMING PYRAMIDS" IEEE TRANSACTIONS ON SIGNAL PROCESSING, IEEE SERVICE CENTER, NEW YORK, NY, US, vol. 51, no. 9, September 2003 (2003-09), pages 2329-2342, XP001171185 ISSN: 1053-587X | 1,11, 21-23, 30,32-35 | H04N7/26 |
| A | * the whole document * * page 2329 * * page 2330 * * page 2333 * * page 2334 * * page 2335 * * figure 1 * ----- | 1-35 | |
| A | CHRISTOPOULOS C A ET AL: "JPEG2000: THE NEW STILL PICTURE COMPRESSION STANDARD" PROCEEDINGS ACM MULTIMEDIA 2000 WORKSHOPS. MARINA DEL REY, CA, NOV. 4, 2000, ACM INTERNATIONAL MULTIMEDIA CONFERENCE, NEW YORK, NY : ACM, US, vol. CONF. 8, 4 November 2000 (2000-11-04), pages 45-50, XP001003691 ISBN: 1-58113-311-1 * the whole document * ----- | 1-35 | **TECHNICAL FIELDS SEARCHED (IPC)** H04N |

The present search report has been drawn up for all claims

| Place of search | Date of completion of the search | Examiner |
|---|---|---|
| Munich | 23 February 2006 | Lindgren, J |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................
& : member of the same patent family, corresponding
   document

EPO FORM 1503 03.82 (P04C01)

**REFERENCES CITED IN THE DESCRIPTION**

**Patent documents cited in the description**

- WO 2004012339 A
- WO 2004012340 A

**Non-patent literature cited in the description**

- **G. STRANG.** Linear Algebra and Its Applications. Brooks Cole Publishers, 1988
- **P. J. BURT ; E. H. ADELSON.** The Laplacian pyramid as a compact image code. *IEEE Trans. Communications,* April 1983, vol. 31 (4), 532-540
- **M. N. DO ; M. VETTERLI.** Framing pyramid. *IEEE Trans. Signal Processing,* September 2003, vol. 51 (9), 2329-2342
- **V. K. GOYAL ; J. A. KELNER.** Quantized frame expansions with erasures. *Applied and Computational Harmonic Analysis,* May 2001, vol. 10 (3), 203-233
- **C. A. CHRISTOPOULOS ; T. EBRAHIMI ; A. N. SKODRAS.** JPEG2000 : the new still picture compression standard. *ACM Multimedia Workshops,* 2000, 45-49